# EUROPEAN PATENT SPECIFICATION

(11) **EP 3 239 188 B1**
(45) Date of publication and mention of the grant of the patent: **26.01.2022**
(21) Application number: 15873218.0
(22) Date of filing: 24.12.2015
(51) Int. Cl.: C08F 8/04, C08F 20/10, C08F 20/06, C08F 16/34, C08F 16/36, C08F 216/08, B32B 27/28, B65D 65/40, B65D 81/24, C08F 220/14, C08F 120/14, C08F 120/18, C08F 220/18

(54) **POLYMETHALLYL ALCOHOL COPOLYMER AND MOLDING CONTAINING SAME, AND METHOD OF PRODUCING POLYMETHALLYL ALCOHOL COPOLYMER**
POLYMETHALLYLALKOHOLCOPOLYMER UND FORMKÖRPER MIT VERWENDUNG DAVON SOWIE POLYMETHALLYLALKOHOLCOPOLYMERHERSTELLUNGSVERFAHREN
COPOLYMÈRE D'ALCOOL POLYMÉTHALLYLIQUE ET CORPS MOULÉ UTILISANT CELUI-CI ET PROCÉDÉ DE PRODUCTION DE COPOLYMÈRE D'ALCOOL POLYMÉTHALLYLIQUE

(30) Priority: 24.12.2014 JP 2014260489
(43) Date of publication of application: 01.11.2017
(73) Proprietor: Kuraray Co., Ltd., Kurashiki-shi, Okayama 710-0801 (JP)
(72) Inventor: NONAKA, Yasuhiro, Kurashiki-shi Okayama 713-8550 (JP)
(74) Representative: Müller-Boré & Partner Patentanwälte PartG mbB
(86) International application number: PCT/JP2015/086109
(87) International publication number: WO 2016/104650

(56) References cited:
- EP-A1- 0 837 078
- CN-A- 102 432 779
- JP-A- H09 143 224
- JP-A- H10 264 318
- JP-A- H10 330 508
- JP-A- H11 293 080
- JP-A- 2011 208 047
- US-A- 3 053 790

## Description

### TECHNICAL FIELD

The present invention relates to a polymethallyl alcohol copolymer and a method of producing the copolymer. Further, the present invention relates to a molding containing the copolymer.

### BACKGROUND ART

Currently, a gas barrier material containing a resin excellent in performance of blocking a gas such as oxygen (gas barrier properties) has been widely used mainly in a field of a packing material having, for example, food or medicine as a content.

Molded bodies such a packing material are normally produced by heat-melt molding, and therefore, the resin is required to have, in addition to gas barrier properties, melt moldability (properties of not causing gel-formed granules during melt molding). For example, WO 01/096464 A1 (PTD 1) and Japanese Patent Laying-Open No. H10-330508 (PTD 2) are conventional techniques related to the resin having gas barrier properties.

### CITATION LIST

### PATENT DOCUMENT

PTD 1: WO 01/096464 A1
PTD 2: Japanese Patent Laying-Open No. H10-330508

JP-A-H11 293080 describes blown containers composed of (A) an allyl alcohol based polymer resin containing not less than 30 mol.% repeating units represented by formula (1) as given therein, where on one side or both sides of the resin (A) is laminated at least one thermoplastic resin (B) selected from the group consisting of polyolefins, polyamides, polyesters, polycarbonates, polystyrenes, polyvinyl chlorides and polyurethanes.

US 3,053,790 describes polymethallyl alcohols.

### SUMMARY OF INVENTION

### TECHNICAL PROBLEMS

The ethylene-vinyl alcohol copolymer (EVOH) described in PTD 1 is insufficient in gas barrier properties in a high humidity environment. PTD 2 discloses a methallyl alcohol polymer as a resin material having gas barrier properties, however, does not refer to melt moldability (suppression of gel-formed granules during melt molding).

An object of the present invention is to provide a copolymer excellent in gas barrier properties in high humidity and in melt moldability (properties of suppressing gel-formed granules during melt molding), a method of producing the copolymer, and a molding containing the copolymer.

### SOLUTIONS TO PROBLEMS

The present invention provides a polymethallyl alcohol copolymer, a molding containing the copolymer, and a method of producing the polymethallyl alcohol copolymer that are described below.
[1] A polymethallyl alcohol copolymer having:
   a structural unit (A) represented by the following formula (A) and a structural unit (B) represented by the following formula (B),
   a molar ratio (A)/(B) of the structural unit (A) to the structural unit (B) being greater than or equal to 0.5,
   a lower limit value of the content of the structural unit (A) of all the structural units is 90 mol%, 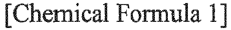 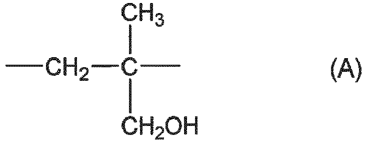 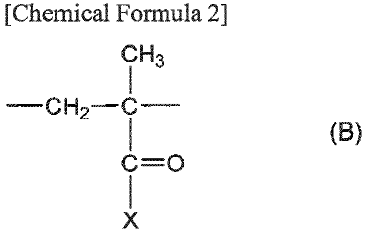 (In the formula (B), X represents at least one selected from the group consisting of a hydrogen atom, an alkoxy group, a hydroxy group, and an alkyl group having 1 to 3 carbon atoms.)
[2] The polymethallyl alcohol copolymer according to [1], wherein the content of the structural unit (B) is 0.01 to 60 mol% of all the structural units.
[3] The polymethallyl alcohol copolymer according to [1] or [2], wherein the structural unit (B) is a methacrylic acid ester unit.
[4] A molding containing the polymethallyl alcohol copolymer according to any one of [1] to [3].
[5] The molding according to [4], being a multilayer structure including at least one layer containing the polymethallyl alcohol copolymer.
[6] The molding according to [5], including at least one layer that contains the polymethallyl alcohol copolymer and a thermoplastic resin layer laminated on one surface or both surfaces of the layer that contains the polymethallyl alcohol copolymer.
[7] The molding according to [5] or [6], wherein the layer containing the polymethallyl alcohol copolymer has a thickness of 0.1 to 1000 µm.
[8] The molding according to any one of [4] to [7], being a packing material.
[9] A method of producing the polymethallyl alcohol copolymer according to any one of [1] to [3], including the steps of:
   obtaining a polymer through polymerization of a monomer composition including a monomer (I) represented by the following formula (I); and
   reducing a part of a structural unit derived from the monomer (I) in the polymer. 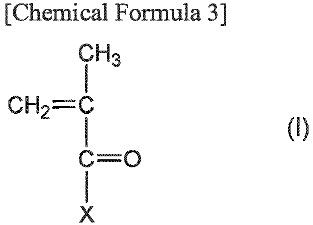 (In the formula (I), X represents at least one selected from the group consisting of a hydrogen atom, an alkoxy group, a hydroxy group, and an alkyl group having 1 to 3 carbon atoms.)

### ADVANTAGEOUS EFFECTS OF INVENTION

According to the present invention, there can be provided a copolymer excellent in gas barrier properties in high humidity and in melt moldability (properties of suppressing gel-formed granules during melt molding), and a molding that contains the copolymer and is excellent in appearance characteristics.

### BRIEF DESCRIPTION OF DRAWINGS

Fig. 1 is a schematic view of a vertically-made, filled, and sealed bag according to one embodiment of a multilayer structure (packing material) of the present invention.
Fig. 2 is a schematic view of a flat pouch according to one embodiment of a multilayer structure (packing material) of the present invention.
Fig. 3 is a sectional view of a vacuum insulator according to one embodiment of a multilayer structure of the present invention.
Fig. 4 is a partial sectional view of an electronic device according to one embodiment of a multilayer structure of the present invention.

### DESCRIPTION OF EMBODIMENTS

### <Polymethallyl alcohol copolymer>

A polymethallyl alcohol copolymer (hereinafter, also referred to as a "PMAL") of the present invention is a copolymer that has a structural unit (A) represented by the following formula (A) and a structural unit (B) represented by the following formula (B):

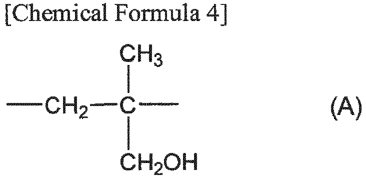

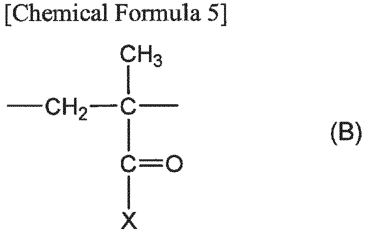

In the PMAL, a lower limit value of a molar ratio (A)/(B) of the structural unit (A) to the structural unit (B) is 0.5, preferably 1, more preferably 1.5, further preferably 4, most preferably 10. An upper limit value of the molar ratio (A)/(B) is preferably 10000, more preferably 1000. The molar ratio (A)/(B) in the above ranges improves the thermal stability of the PMAL while allowing the PMAL to maintain the gas barrier properties in high humidity, to give a resin material that achieves at a high level both the gas barrier properties in high humidity and melt moldability. The melt moldability in the present specification means properties of suppressing gel-formed granules that can be generated during melt molding, and the melt moldability can be evaluated on the basis of the number of generated gel-formed granules 1 hour after the start of formation of a film.

A lower limit value of the content of the structural unit (A) of all the structural units contained in the PMAL is 90 mol%. An upper limit value of the content is preferably 99.99 mol%, more preferably 99.95 mol%, particularly preferably 99.90 mol%. When the content of the structural unit (A) is less than the lower limit values, the gas barrier properties in high humidity is likely to be decreased, and when the content of the structural unit (A) is larger than the upper limits, the melt moldability is likely to be deteriorated.

The structural unit (B) is a structural unit represented by the formula (B). In the formula (B), X represents at least one selected from the group consisting of a hydrogen atom, an alkoxy group, a hydroxy group, and an alkyl group having 1 to 3 carbon atoms. The PMAL may have two or more structural units (B) that are different in X. Specific examples of the alkyl group having 1 to 3 carbon atoms include a methyl group, an ethyl group, an n-propyl group, and an i-propyl group. One preferable example of the structural unit (B) is a methacrylic acid ester unit, and accordingly, one preferable example of X is an alkoxy group. The alkoxy group preferably has 1 to 3 carbon atoms, and specific examples of the alkoxy group include a methoxy group, an ethoxy group, an n-propoxy group, and an i-propoxy group.

A lower limit value of the content of the structural unit (B) of all the structural units contained in the PMAL is preferably 0.01 mol%, more preferably 0.05 mol%, further preferably 0.10 mol%. An upper limit value of the content is preferably 60 mol%, more preferably 40 mol%, further preferably 20 mol%, particularly preferably 10 mol%. When the content of the structural unit (B) is less than the lower limit values, an effect of enhancing melt moldability is unlikely to be obtained, and when the content is larger than the upper limit values, the melt moldability is likely to be decreased, and the gas barrier properties can also be decreased.

The PMAL can have one other structural unit (C) than the structural unit (A) and the structural unit (B). Examples of the structural unit (C) include hydroxy group-containing monomers such as allyl alcohol, vinyl alcohol, 3,4-diol-1-butene, and 2-methylene-1, 3-propanediol; acrylic acid ester monomers such as methyl acrylate, ethyl acrylate, and butyl acrylate; carboxyl group-containing monomers such as acrylic acid and crotonic acid; acrolein; olefin monomers such as ethylene, propylene, 1-butene, isobutene, 1-pentene, 1-hexene, and 1-octene; diene monomers such as butadiene and isoprene; aromatic substituted vinyl monomers such as styrene, α-methylstyrene, o-, m-, p-methylstyrene, and vinylnaphthalene; vinyl ether monomers such as methyl vinyl ether, ethyl vinyl ether, and butyl vinyl ether; vinyl halide monomers such as vinyl chloride and vinyl fluoride; vinylidene halide monomers such as vinylidene chloride and vinylidene fluoride; nitrile monomers such as acrylonitrile and methacrylonitrile; and maleic acid derivative monomers such as maleimide, N-methylmaleimide, N-ethylmaleimide, N-cyclohexylmaleimide, and dimethyl maleate. When having the structural unit (C), the PMAL may have only one structural unit (C) or two or more structural units (C).

The content of the structural unit (C) of all the structural units contained in the PMAL is preferably determined in view of the gas barrier properties in high humidity. Specifically, the content is preferably set so that oxygen permeability of the PMAL at a temperature of 20°C and a relative humidity of 100% that is described below is in the range of less than or equal to 30 mL•20 µm/(m²•day•atm). From the viewpoint of reducing the oxygen permeability, an upper limit value of the content of the structural unit (C) of all the structural units is preferably 60 mol%, more preferably 50 mol%, further preferably 30 mol%, particularly preferably 10 mol%.

The oxygen permeability of the PMAL at a temperature of 20°C and a relative humidity of 100% is preferably less than or equal to 30 mL•20 µm/(m²•day•atm), more preferably less than or equal to 20 mL•20 µm/(m2•day•atm), further preferably less than or equal to 10 mL•20 µm/(m²•day•atm), particularly preferably less than or equal to 5 mL•20 µm/(m²•day•atm), from the viewpoint of the gas barrier properties in a high humidity environment. The oxygen permeability of the PMAL grows lower, more excellent barrier performance can be obtained in a high humidity environment even when the PMAL constitutes a multilayer structure. Here, for example, an oxygen permeability of "30 mL•20 µm/(m²•day•atm)" represents permeation of 30 mL of oxygen per 1 m² of a film having a thickness of 20 µm a day at a pressure difference of an oxygen gas of 1 atm.

The oxygen permeability of the PMAL at a temperature of 20°C and a relative humidity of 65% is preferably less than or equal to 10 mL•20 µm/(m²•day•atm), more preferably less than or equal to 5 mL•20 µm/(m²•day•atm), further preferably 2 mL•20 µm/(m²•day•atm), particularly preferably less than or equal to 1 mL•20 µm/(m²•day•atm), from the viewpoint of the gas barrier properties. The oxygen permeability of the resin composition grows lower, more excellent barrier performance can be obtained even when the resin composition constitutes a multilayer structure.

The oxygen permeability of the PMAL can be controlled by the type and the content of the structural unit (B) and the structural unit (C). In the meantime, the oxygen permeability of a PMAL layer of a molding containing the PMAL can also be controlled by, in addition to the type and the content of the structural unit (B) and the structural unit (C), stretch orientation of a resin that is formed into the molding.

A lower limit value of a melt flow rate (MFR) of the PMAL is, as a measured value at a temperature of 210°C and a load of 2160 g, preferably 0.01 g/10 min, more preferably 0.05 g/10 min, further preferably 0.1 g/10 min, particularly preferably 0.3 g/10 min. On the other hand, an upper limit value of the MFR is, as a measured value under the same conditions, preferably 200 g/10 min, more preferably 50 g/10 min, further preferably 30 g/10 min, particularly preferably 15 g/10 min, most preferably 10 g/10 min. Adjustment of the MFR to the above ranges not only facilitates melt molding but also can enhance coloring resistance (properties of not causing coloring such as yellowing by heat) of the PMAL and long-run properties (properties of not changing physical properties such as viscosity even in melt molding for a long period of time) of the PMAL. Examples of a method of adjusting the MFR to the above ranges include a method of adjusting degree of polymerization of the PMAL and a method of adjusting the type of the structural units (B) and (C). The PMAL preferably has a number average degree of polymerization of 100 to 10000.

One other component can be added to the PMAL to form a resin composition. Examples of the other component include additives such as an antioxidant, an ultraviolet absorber, a plasticizer, an antistatic agent, a non-metal-containing thermal stabilizer, a lubricant, a coloring agent, a filler, an acid component, a metal salt, another polymer compound (e.g., another thermoplastic resin), and a solvent (water or various kinds of organic solvents). One or two or more of these additives can be blended without inhibiting the function effects of the present invention. The usage of the other polymer compound is normally less than or equal to 50 mass%, preferably less than or equal to 20 mass%, relative to the content of the PMAL.

### <Method of producing PMAL>

The PMAL of the present invention that has the structural units (A) and (B) can be produced by obtaining a polymer through polymerization of a monomer composition including a monomer (I) represented by the following formula (I), and reducing a part of a structural unit derived from the monomer (I) in the polymer.

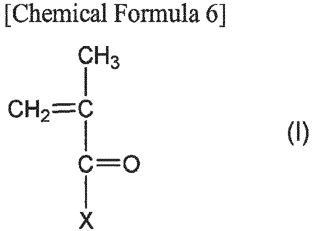

In the formula (I), X represents at least one selected from the group consisting of a hydrogen atom, an alkoxy group, a hydroxy group, and an alkyl group having 1 to 3 carbon atoms. The monomer (I) may be a mixture of two or more monomers that are different in X. Specific examples of the alkyl group having 1 to 3 carbon atoms include a methyl group, an ethyl group, an n-propyl group, and an i-propyl group. One preferable example of X is an alkoxy group, preferably an alkoxy group having 1 to 3 carbon atoms, and specific examples thereof include a methoxy group, an ethoxy group, an n-propoxy group, and an i-propoxy group.

Specific examples of the monomer (I) include methacrolein; alkyl methacrylate monomers such as methyl methacrylate, ethyl methacrylate, n-propyl methacrylate, and i-propyl methacrylate; methacrylic acid; and 3-methyl-3-butene-2-one.

In obtaining the polymer, when the PMAL is produced that does not contain the other structural unit (C), the monomer composition is formed of the monomer (I). When the PMAL is produced that contains the other structural unit (C), the monomer composition contains not only the monomer (I) but also a monomer that forms the structural unit (C).

Homopolymerization or copolymerization of the monomer composition can be performed by known polymerization methods such as radical polymerization and anionic polymerization. As a radical polymerization initiator, there can be provided as examples azo initiators such as 2,2'-azobisisobutyronitrile, 2,2'-azobis(2,4'-dimethylvaleronitrile), and 2,2'-azobis(4-methoxy-2,4-dimethylvaleronitrile); and peroxide initiators such as isobutyl peroxide, di-n-propyl peroxydicarbonate, and t-butyl peroxypivalate. A polymerization temperature is normally about room temperature to 100°C.

As an anionic polymerization initiator, there can be used basic alkali metal or alkaline-earth metal derivatives such as butyllithium, lithium aluminum hydride, methylmagnesium bromide, ethylmagnesium chloride, and triphenylmethyl calcium chloride. The anionic polymerization is normally performed at about -100°C to room temperature in an aprotic solvent such as tetrahydrofuran, dimethoxyethane, or diethyl ether.

A part of a structural unit derived from the monomer (I) i.e., the structural unit (B) in an obtained polymer is reduced to convert the structural unit derived from the monomer (I) into the structural unit (A), so that the PMAL can be obtained that contains the structural units (A) and (B). As a method of reducing the polymer, there can be provided as examples a method of using, as a reducing agent, a metallic hydride such as lithium aluminum hydride, sodium borohydride, lithium borohydride, or diborane; and a method of adding hydrogen through a transition metal (e.g., ruthenium, rhodium, nickel, palladium, or platinum-based) catalyst. In the reduction, the usage of a reducing agent for the structural unit derived from the monomer (I), a reaction period, a reaction temperature, and the like are adjusted, so that the molar ratio (A)/(B) of the structural unit (A) to the structural unit (B) falls within the above ranges.

A solvent used for the reduction reaction is appropriately selected in view of solubility of the polymer and reactivity with the reducing agent. Specific examples of the solvent include tetrahydrofuran, N-methylmorpholine, dimethylacetamide, dimethylformamide, dimethyl sulfoxide, dimethoxyethane, methanol, ethanol, and propanol. A temperature of the reduction reaction is normally about room temperature to 200°C, preferably 50 to 150°C. When a syndiotactic or isotactic polymer or copolymer is reduced, the PMAL can be obtained that maintains its original stereoregularity.

The obtained PMAL may be subjected to a post-treatment of, for example, removing or refining a used solvent (e.g., a reaction solvent or a solvent such as water that is used in a post-treatment). When the other component described above is added to the PMAL to form a resin composition, the other component may be added to the monomer composition or the obtained PMAL.

The PMAL obtained through the reduction reaction can be used as it is as a material for a molding. However, when the PMAL contains a solvent (e.g., water), it is preferable to remove the solvent and dry the PMAL. The content rate of a solvent in the dried PMAL is preferably less than or equal to 1.0 mass%, more preferably less than or equal to 0.8 mass%, further preferably less than or equal to 0.5 mass% of the whole PMAL, from the viewpoint of preventing molding troubles such as generation of voids due to, for example, foam formation during molding processing.

The drying method is not particularly limited, and suitable examples thereof include stationary drying and fluidized drying. A single drying method may be used or a plurality of methods may be combined, for example, by performing fluidized drying and then stationary drying. The drying may be either a continuous technique or a batch technique. When a plurality of drying techniques are combined, the continuous technique or the batch technique can be freely selected for each of the drying techniques. Drying in low oxygen concentration, in absence of oxygen, or in a nitrogen atmosphere is preferable in terms of reducing deterioration of the PMAL caused by oxygen during drying. Especially, drying in a nitrogen atmosphere is preferable.

### <Molding>

A molding according to the present invention is one that contains the PMAL described above, more specifically one obtained by molding the PMAL described above or a resin composition containing the PMAL. The molding method is not particularly limited, and there can be used various molding methods such as melt molding (e.g., extrusion molding, injection molding, and blow molding), solution molding, and powder molding. The molding method, however, is preferably melt molding. The PMAL of the present invention or the resin composition containing the PMAL can effectively suppress generation of gel-formed granules during melt molding to give a molding excellent in appearance characteristics. The use of the PMAL of the present invention or the resin composition containing the PMAL can also give a multilayer structure excellent in appearance characteristics. In melt molding, a temperature during melting of the PMAL or the resin composition containing the PMAL is preferably about 100 to 300°C. A temperature exceeding 300°C may possibly cause a thermally deteriorated or decomposed PMAL. On the other hand, a temperature of less than 100°C sometimes makes melting of the PMAL difficult.

The molding according to the present invention is excellent in gas barrier properties to be suitable for use application that takes advantage of such properties, and a representative example of the use application is a packing material (including a packing container). The shape/form of the molding is not particularly limited, and examples of the shape/form include a single-layered or multilayered film, a sheet, a pipe, a tube, a container (e.g., a deep-drawn container, a bottle, a cup, a tank, a pouch, and a bag), and a fiber. The molding having a shape/form other than a film or a sheet may also be a single layer or multilayer structure. The packing material according to the present invention can be suitably used as, for example, a packing material for food or medicine.

Specific examples of the molding according to the present invention preferably include a single layer structure that includes at least one layer containing the PMAL or the resin composition containing the PMAL (suitably a layer made from the PMAL or the resin composition containing the PMAL) and that includes only the layer containing the PMAL or the resin composition containing the PMAL; a multilayer structure that includes at least one layer containing the PMAL or the resin composition containing the PMAL and at least one other layer different from the layer; and a multilayer structure that includes at least two layers containing the PMAL or the resin composition containing the PMAL and that does not include any other layer.

As a suitable layer structure of the multilayer structure, there can be provided as examples P/T, T/P/T, P/Ad/T, and T/Ad/P/Ad/T when a layer containing the PMAL according to the present invention or the resin composition containing the PMAL is defined as P, a layer made from an adhesive resin (adhesive resin layer) as Ad, and a layer made from a thermoplastic resin (thermoplastic resin layer) as T. These layers may be a single layer or a multilayer. An adhesive agent layer can also be interposed in place of the adhesive resin layer.

A method of producing the multilayer structure is not particularly limited, and examples of the method include:
i) a method of melt-extruding a thermoplastic resin onto the layer P (e.g., a film and a sheet) to form the thermoplastic resin layer T on the layer P;
ii) a method of co-extruding or co-injecting the PMAL according to the present invention or the resin composition containing the PMAL, and another thermoplastic resin to form a P/T or T/P/T layer structure; and
iii) a method of laminating the layer P and the thermoplastic resin layer T (e.g., a film and a sheet) with the adhesive resin layer Ad or the adhesive agent layer interposed between the layer P and the thermoplastic resin layer T.

When the adhesive resin layer Ad is used, the multilayer structure can also be produced by co-extrusion or co-injection in the same manner as in the method ii), and another base material (e.g., a film and a sheet) can also be used in place of the thermoplastic resin T.

As the thermoplastic resin used for the other layer in the multilayer structure, there can be provided as examples a homopolymer or a copolymer of olefins such as linear low-density polyethylene, low-density polyethylene, medium-density polyethylene, high-density polyethylene, an ethylene-vinyl acetate copolymer, an ethylene-propylene copolymer, polypropylene, a propylene-α-olefin copolymer (a-olefin having 4 to 20 carbon atoms), polybutene, and polypentene; an ethylene-vinyl alcohol copolymer; polyesters such as polyethylene terephthalate; a polyester elastomer; polyamides such as Nylon 6 and Nylon 66; polystyrene; polyvinyl chloride; polyvinylidene chloride; a (meth)acrylic resin; a vinyl ester resin; a polyurethane elastomer; polycarbonate; chlorinated polyethylene; and chlorinated polypropylene.
In particular, preferably used are polyethylene, an ethylene-vinyl acetate copolymer, an ethylene-propylene copolymer, polypropylene, polyesters, polyamides, and polystyrene.

The adhesive resin that forms the adhesive resin layer Ad is not particularly limited as long as the adhesive resin has adhesiveness to the PMAL of the present invention or the resin composition containing the PMAL, and the thermoplastic resin. The adhesive resin, however, is preferably an adhesive resin containing a carboxylic acid-modified polyolefin. As the carboxylic acid-modified polyolefin, there can be suitably used a carboxyl group-containing modified olefin polymer obtained by chemically (e.g., an addition reaction and a graft reaction) bonding an olefin polymer with an ethylenic unsaturated carboxylic acid, or an ester or an anhydride thereof.

The olefin polymer referred to herein means polyolefins such as polyethylene (low pressure, medium pressure, and high pressure), linear low-density polyethylene, polypropylene, and polybutene; and a copolymer (e.g., an ethylene-vinyl acetate copolymer and an ethylene-acrylic acid ethyl ester copolymer) of an olefin with another monomer (e.g., vinyl ester and an unsaturated carboxylic acid ester). In particular, preferred are linear low-density polyethylene, an ethylene-vinyl acetate copolymer (content of vinyl acetate 5 to 55 mass%), an ethylene-acrylic acid ethyl ester copolymer (content of acrylic acid ethyl ester 8 to 35 mass%), and more preferred are linear low-density polyethylene and an ethylene-vinyl acetate copolymer. As the ethylenic unsaturated carboxylic acid, or an ester or an anhydride thereof, there can be provided as examples an ethylenic unsaturated monocarboxylic acid or an ester thereof; and an ethylenic unsaturated dicarboxylic acid, or a monoester, a diester, or an anhydride thereof. In particular, an ethylenic unsaturated dicarboxylic acid anhydride is preferable. Specific examples include maleic acid, fumaric acid, itaconic acid, maleic acid anhydride, itaconic acid anhydride, maleic acid monomethyl ester, maleic acid monoethyl ester, maleic acid diethyl ester, and fumaric acid monomethyl ester. Particularly, maleic acid anhydride is suitable.

As an adhesive agent that forms the adhesive agent layer, there can be used known adhesive agents having, as an adhesive agent component, for example, an organic titanium compound, an isocyanate compound, and a polyester compound.

Among the methods i) to iii), preferably used is a method of co-extruding the PMAL according to the present invention or the resin composition containing the PMAL, and another thermoplastic resin. The co-extrusion method is not particularly limited, and examples thereof include a multimanifold-merging T die method, a feedblock-merging T die method, and an inflation method.

The multilayer structure may be subjected to secondary processing to give a molding. The shape/form of the molding obtained through the secondary processing is not particularly limited, and representative molded bodies are as follows.
a) A multilayer stretched sheet or film obtained by uniaxially or biaxially stretching the multilayer structure (e.g., a sheet and a film) and subjecting the stretched multilayer structure to a heat treatment;
b) A multilayer rolled sheet or film obtained by rolling the multilayer structure (e.g., a sheet and a film);
c) A multilayer tray cup-shaped container obtained by subjecting the multilayer structure (e.g., a sheet and a film) to thermal molding processing such as vacuum molding, pressure molding, or vacuum pressure molding; and
d) A bottle or cup-shaped container or the like obtained by subjecting the multilayer structure (e.g., a pipe) to, for example, stretch blow molding.

The secondary processing method is not limited to the methods exemplified to obtain the above molded products, and, for example, there can be appropriately used a known secondary processing method other than the above methods, such as blow molding.

### <Use Application>

The multilayer structure of the present invention is more specifically described with regard to its use application. The multilayer structure of the present invention can be applied to, for example, a packing material. The packing material of the present invention includes the multilayer structure, and may consist of only the multilayer structure of the present invention or may also consist of the multilayer structure and another member. The packing material can be manufactured by various methods. For example, a sheet-shaped multilayer structure or a film material including the multilayer structure (hereinafter, also simply referred to as a "film material") is joined to mold a predetermined container shape, so that a container (packing material) may be manufactured. The packing material including the multilayer structure of the present invention can be applied to various use applications, taking advantage of excellent gas barrier properties and water vapor barrier properties of the packing material. The packing material is preferable for use application where barrier properties against oxygen are necessary or use application where the packing material is internally substituted by various functional gases. For example, the packing material according to the present invention is preferably used as a packing material for food. Further, the packing material according to the present invention is preferably used, in addition to as a packing material for food, as a packing material for packing chemicals such as an agricultural chemical and a drug; a medical device; industrial materials such as a machine part and a precision material; and clothes. The multilayer structure of the present invention may also be used for electronic devices such as a solar battery and a display. For example, when used for a solar battery, the multilayer structure of the present invention is used as a member of the solar battery. Alternatively, when used for a display, the multilayer structure of the present invention is used as a member of the display.

The multilayer structure and the packing material of the present invention may be subjected to secondary processing to give various molded products. Such molded products may be a vertically-made, filled, and sealed bag, a pouch, a vacuum insulator, a vacuum packing bag, a bottle, a cup-shaped container, a tank, a bag, a laminated tube container, an infusion bag, a container lid, a paper container, a strip tape, or an in-mold label.

### (Vertically-made, filled, and sealed bag)

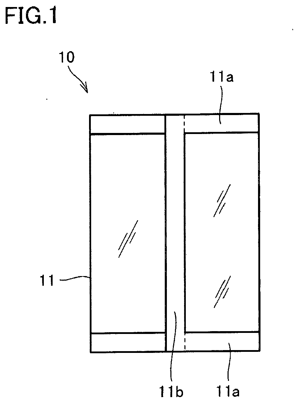

The packing material including the multilayer structure of the present invention may be a vertically-made, filled, and sealed bag. Fig. 1 shows one example. A vertically-made, filled, and sealed bag 10 shown in Fig. 1 is formed by sealing a multilayer structure 11 at three ends including two edges 11a and a body 11b. Vertically-made, filled, and sealed bag 10 can be produced by a vertical bag making and filling machine. Various methods are applied for production of a bag by the vertical bag making and filling machine. In any methods, however, a material to be a content is supplied into the bag from an upper opening of the bag, and then the opening is sealed to produce a vertically-made, filled, and sealed bag. The vertically-made, filled, and sealed bag consists of one film material heat-sealed at, for example, three ends including an upper edge, a lower edge, and a side. The vertically-made, filled, and sealed bag as a container, according to the present invention, is excellent in gas barrier properties and water vapor barrier properties, and the barrier performance is maintained even after a retort treatment, so that quality deterioration of a content can be suppressed over a long period of time by the vertically-made, filled, and sealed bag.

### (Pouch)

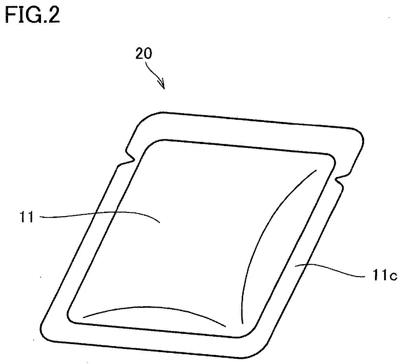

The packing material including the multilayer structure of the present invention may be a pouch. The "pouch" in the present specification means a container that mainly has food, daily commodities, or medicine as a content and that has a film material as a wall member. Examples of the pouch include, in terms of its shape and use application, a spout pouch, a zipper-sealed pouch, a flat pouch, a stand-up pouch, a horizontally-made, filled, and sealed pouch, and a retort pouch. Fig. 2 shows one example. A flat pouch 20 shown in Fig. 2 is formed by mutually joining two multilayer structures 11 at their peripheries 11c. The pouch may be formed by laminating a barrier multilayer structure and at least one other layer. The pouch of the present invention is excellent in gas barrier properties and maintains its barrier performance even after a retort treatment. Therefore, the use of the pouch can prevent alteration of a content over a long period of time even after transportation or long storage. Further, in one example of the pouch, transparency can be excellently held to facilitate confirmation of a content or confirmation of deterioration-related alteration of a content.

### (Vacuum insulator)

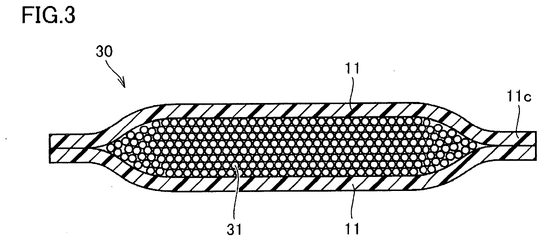

The multilayer structure of the present invention can also be used for a vacuum insulator. Fig. 3 shows one example. A vacuum insulator 30 in Fig. 3 includes two multilayer structures 11 as covering materials and a core material 31, two multilayer structures 11 are mutually joined at peripheries 11c, and core material 31 is disposed in multilayer structures 11 surrounding the core material, and the inside of the vacuum insulator is depressurized. Multilayer structures 11 are firmly attached to core material 31 due to pressure difference between the inside and the outside of vacuum insulator 30. Vacuum insulator 30 may be used after formed in such a manner that one multilayer structure is used as a covering material, core material 31 is disposed so as to be included in the multilayer structure, and the multilayer structure is folded and heat-sealed at its edge. The material and the shape of core material 31 are not particularly limited as long as the material and the shape are appropriate for thermal insulation. Examples of core material 31 include a pearlite powder, a silica powder, a precipitated silica powder, diatomaceous earth, calcium silicate, glass wool, rock wool, artificial (synthetic) wool, and resin foam (e.g., styrene foam and urethane foam). As core material 31, there can also be used, for example, a hollow container molded in a predetermined shape and a honeycomb structure, and the core material may also be particulate.

The vacuum insulator of the present invention that is thinner and lighter than a urethane foam insulator can achieve thermal insulation characteristics equivalent to thermal insulation characteristics of the urethane foam insulator. The vacuum insulator of the present invention can hold an insulation effect over a long period of time, so that the vacuum insulator can be used for, for example, an insulation material of home electric appliances such as a refrigerator, hot-water supply equipment, and a rice cooker; a residential insulation material used in, for example, a wall, a ceiling, an attic, and a floor; an insulation panel of, for example, a vehicle sealing material, a heat storage device, and a vending machine; and a heat transfer device such as a heat pump-applied device.

### (Electronic device)

The multilayer structure of the present invention is excellent not only in gas barrier properties but also in water vapor barrier properties. Particularly, when the multilayer structure of the present invention is used for an electronic device, these properties sometimes largely contribute to durability of the electronic device. Examples of the electronic device include photoelectric converters such as a solar battery; an information display device having a display such as an organic EL display, a liquid crystal display (LCD), or an electronic paper; and lamps such as an organic EL light-emitting element. Examples of the solar battery include a silicon solar battery, a compound semiconductor solar battery, and an organic thin film solar battery. Examples of the silicon solar battery include a single crystal silicon solar battery, a polycrystalline silicon solar battery, and an amorphous silicon solar battery.
Examples of the compound semiconductor solar battery include a group-III-V compound semiconductor solar battery, a group-II-VI compound semiconductor solar battery, and a group-I-III-VI compound semiconductor solar battery. Examples of the organic thin film solar battery include a pn heterojunction organic thin film solar battery and a bulk heterojunction organic thin film solar battery. The solar battery may also be an integrated solar battery having a plurality of unit cells connected in series.

Examples of the multilayer structure used for an electronic device include electronic device-related members such as display members including an LCD substrate film, an organic EL display substrate film, an electronic paper substrate film, an electronic device sealing film, and a PDP film; an LED film; an IC tag film; and solar battery members including a solar battery module, a solar battery back sheet, and a solar battery protective film; an optical communication member; an electronic device flexible film; a fuel battery diaphragm; a fuel battery sealing film; and a substrate film for various functional films. When used as a member of a display, the multilayer structure is used as, for example, a low reflection film.

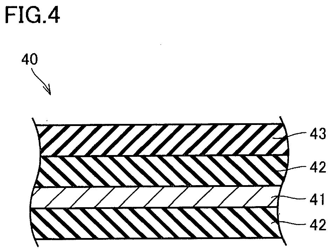

Fig. 4 shows a partial sectional view of one example of an electronic device including the multilayer structure of the present invention. An electronic device 40 shown in Fig. 4 includes an electronic device main body 41, a sealing member 42, and a protective sheet (multilayer structure) 43, and protective sheet 43 is disposed so as to protect a surface of electronic device main body 41. Protective sheet 43 may be disposed directly on one surface of electronic device main body 41 or may be disposed on electronic device main body 41 with another member such as sealing member 42 interposed between the protective sheet and the electronic device main body. Protective sheet 43 includes the multilayer structure of the present invention. Protective sheet 43 may consist of only the multilayer structure or may include the multilayer structure and another member (e.g., another layer) laminated on the multilayer structure. Protective sheet 43 is not particularly limited as to its thickness and material as long as the protective sheet is a layered laminate suitable for protecting the surface of the electronic device and includes the multilayer structure described above. Sealing member 42 may cover the whole surface of electronic device main body 41. Sealing member 42 is an optional member that is appropriately added in accordance with, for example, the type and the use application of electronic device main body 41. As sealing member 42, for example, an ethylene-vinyl acetate copolymer or polyvinyl butyral is used. Protective sheet 43 may also be disposed on a surface opposite from the surface having protective sheet 43 disposed thereon.

Electronic device main body 41 can be manufactured by a so-called roll-to-roll technique depending on the type of the electronic device main body. In the roll-to-roll technique, a flexible substrate (e.g., a stainless substrate and a resin substrate) wound around a feeding roll is fed and an element is formed on the substrate to manufacture electronic device main body 41, and electronic device main body 41 obtained is wound around a winding roll. In this case, it is desirable to prepare protective sheet 43 in a form of a flexible long sheet, more specifically in a form of a wound body of a long sheet. In one example, protective sheet 43 fed from the feeding roll is laminated on electronic device main body 41 before the electronic device main body is wound around the winding roll, and the protective sheet is wound together with electronic device main body 41. In another example, electronic device main body 41 wound around the winding roll may be fed again from the roll for lamination of protective sheet 43. In one preferable example of the present invention, the electronic device itself is flexible.

### EXAMPLES

Hereinafter, the present invention is more specifically described by way of examples; however, the present invention is not to be limited by the examples. In the following examples and comparative examples, "part" and "%" mean part by mass and "mass%," respectively unless otherwise specified. A measuring method and an evaluation method were performed according to the following methods.

### [1] Identification of structure of PMAL (A)

A PMAL was pulverized by frost shattering and sieved with a sieve having a nominal size of 1 mm (in accordance with standard specifications of a sieve JIS Z 8801). A powder of the PMAL that passed through the sieve in an amount of 5 g was immersed in 100 g of ion-exchanged water and stirred at 70°C for 4 hours, and then an operation of dehydrating and drying was performed twice, and drying was performed by a vacuum drier at 80°C for 48 hours. The obtained powder was subjected to ¹H-NMR measurement and ¹³C-NMR measurement under the following measurement conditions, and the structure of PMALs in the examples and the comparative examples that are described below were identified from a ratio of peak strength obtained under the following measurement conditions (I₁ : I₂ : I₃, I₅ : I₆ : I₇ : I₈), the molar ratio (A)/(B) of the structural unit (A) to the structural unit (B) (I₃/2)/(I₄/3), the content of the structural unit (A) of all the structural units [(I₃/2)/{(I₃/2) + (I₄/3)}] × 100, and the content of the structural unit (B) of all the structural units [(I₄/3)/{(I₃/2) + (I₄/3)}] × 100.

| | |
|---|---|
| (¹H-NMR measurement conditions) | |
| Observation frequency | : 600 MHz |
| Solvent | : DMSO-d₆ |
| Polymer concentration | : 5 mass% |
| Measurement temperature | : 80°C |
| Cumulative number | : 512 |
| Pulse delay time | : 2.8 sec |
| Sample rotational speed | : 10~12 Hz |
| Pulse width (90° pulse) (¹³C-NMR measurement | : 15 µsec. conditions) |
| Observation frequency | : 150 MHz |
| Solvent | : DMSO-d₆ |
| Polymer concentration | : 10 mass% |
| Measurement temperature | : 80°C |
| Cumulative number | : 8000 |
| Measurement mode | : Inverse gated decoupling method |
| Pulse delay time | : 1.2 sec |
| Sample rotational speed | : 10 - 12 Hz |
| Pulse width (90° pulse) (Analysis method) | : 16 µsec. |

From a ¹H-NMR spectrum were obtained a peak integral value (I₁) of 0.9 to 1.2 ppm, a peak integral value (I₂) of 1.2 to 1.6 ppm, a peak integral value (I₃) of 3.1 to 3.5 ppm, and a peak integral value (I₄) of 3.5 to 3.7 ppm. Here, the peak of 0.9 to 1.2 ppm is derived from methyl on a side chain, the peak of 1.2 to 1.6 ppm is derived from methylene on the main chain, the peak of 3.1 to 3.5 ppm is derived from methylene on a side chain, and the peak derived from 3.5 to 3.7 ppm is derived from methyl of polymethyl methacrylate, a methyl ester. From these integral values are calculated the structure and the degree of progress of a reduction reaction of the PMAL by the following equation. In the meantime, a peak of hydrogen of a hydroxy group was observed around 4.6 ppm that was not used for analysis.

Further, from a ¹³C-NMR spectrum were obtained a peak integral value (I₅) of 21 to 27 ppm, a peak integral value (I₆) of 38 to 43 ppm, a peak integral value (I₇) of 43 to 52 ppm, and a peak integral value (I₈) of 67 to 73 ppm. Here, the peak of 21 to 27 ppm is derived from a primary carbon atom on a side chain, the peak of 38 to 43 ppm is derived from a quaternary carbon atom on the main chain, the peak of 43 to 52 ppm is derived from a secondary carbon atom on the main chain, and the peak of 67 to 73 ppm is derived from a secondary carbon atom on a side chain having a hydroxy group bonded thereto.

### [2] Measurement of weight average molecular weight and molecular weight distribution

Measurement was performed with use of gel permeation chromatography (GPC), and a value was calculated in terms of a molecular weight of standard polymethyl methacrylate. Measurement conditions were as follows.
Device: LC-20AT manufactured by SHIMADZU CORPORATION
Detector: differential refractive index detector
Column: two columns (TSKgel AWM-M manufactured by Tosoh Corporation) connected together
Mobile phase: 10 mmol/L lithium bromide DMF solution
Flow rate: 0.5 mL/min
Column temperature: 40°C

### [3] Evaluation of melt moldability

With use of the PMAL, linear low-density polyethylene (LLDPE: "ULTZEX 2022L" manufactured by Mitsui Chemicals, Inc.), and an adhesive resin ("Bondine TX8030" manufactured by SUMICA. ATOCHEM Co., Ltd., hereinafter also referred to as Ad), 3-component 5-layer multilayer films (LLDPE/Ad/PMAL/Ad/LLDPE = thickness 50 µm/10 µm/10 µm/10 µm/50 µm) were continuously manufactured by a multilayer film extruder under the following method and conditions.

### (Conditions for manufacturing multilayer film)

- Extruder:
   For PMAL: laboratory extruder 20 mmϕ (ME type), CO-EXT (manufactured by Toyo Seiki Seisaku-sho, Ltd.)
   For Ad: extruder 20 mmϕ, SZW20GT-20MG-STD (manufactured by TECHNOVEL CORPORATION)
   For LLDPE: extruder 32 mmϕ, GT-32-A (manufactured by Research Laboratory of Plastics Technology Co., Ltd.)
- PMAL extrusion temperature
   supply zone/compression zone/measuring zone/die
   = 175/210/210/210°C
- Extrusion temperature for Ad
   supply zone/compression zone/measuring zone/die
   = 100/160/220/220°C
- Extrusion temperature for LLDPE
   supply zone/compression zone/measuring zone/die
   = 150/200/210/220°C
- Die 300 mm wide coat hanger die (manufactured by Research Laboratory of Plastics Technology Co., Ltd.)

A film obtained 1 hour after the start of formation of a multilayer film was sampled in a size of 10 m², and gel-formed granules were grossly observed and counted. The number of gel-formed granules were converted to the number of gel-formed granules per 1 m² and determined as follows. On gross are normally observed gel-formed granules having a size of greater than or equal to 300 µm.
A: less than 20 granules/m²
B: greater than or equal to 20 granules/m² and less than 40 granules/m²
C: greater than or equal to 40 granules/m² and less than 60 granules/m²
D: greater than or equal to 60 granules/m² and less than 80 granules/m²
E: greater than or equal to 80 granules/m²

### [4] Evaluation of gas barrier properties

The multilayer film manufactured for the evaluation of melt molding was cut into two 10 cm × 10 cm multilayer films, and ketchup in an amount of 20 g was encapsulated in the multilayer films by heat sealing in a nitrogen box and stored at 35°C and 85 %RH for 150 days. Then, the gas barrier properties were evaluated according to degree of discoloration of ketchup based on the following evaluation criteria.
A: hardly discolored
B: slightly discolored
C: discolored (browned)
D: darkened

### <Production Example: synthesis of polymethyl methacrylate>

Into a stirrer and collecting tube-equipped autoclave were charged 100 parts by mass of methyl methacrylate, 0.0053 parts by mass of 2,2'-azobis(2-methylpropionitrile), and 0.20 parts by mass of n-octyl mercaptan in a nitrogen atmosphere, and the mixture was stirred while nitrogen was blown into the autoclave to remove dissolved oxygen, so that a raw liquid was obtained. Next, the raw liquid was charged into a reaction tank connected to the autoclave via a pipe until the raw liquid fills 2/3 of the volume of the reaction tank, and first, a polymerization reaction was started by a batch technique while the temperatures was maintained at 140°C. When polymerization conversion reached 48 mass%, the raw liquid was supplied from the autoclave into the reaction tank at a flow rate so as to have an average residence time of 150 minutes, a reaction liquid was extracted from the reaction tank at a flow rate equivalent to the flow rate for supplying the raw liquid, and then the polymerization reaction was switched to a continuous flow technique while the temperature was maintained at 140°C. The polymerization conversion was 48 mass% in a static state after the switching.

The reaction liquid extracted from the reaction tank in a static state was supplied to a multitubular heat exchanger having an internal temperature of 230°C at a flow rate so as to have an average residence time of 2 minutes and was heated. Then, the heated reaction liquid was introduced into an insulated flash evaporator, volatile matter was removed that contained unreacted monomers as a main component to give a molten resin. The molten resin having the volatile matter removed therefrom was supplied to a twin screw extruder having an internal temperature of 260°C, discharged in a strand shape and cut by a pelletizer to give pellet-shaped polymethyl methacrylate. As a result of GPC analysis, the obtained polymethyl methacrylate had a weight average molecular weight of 117000 and a molecular weight distribution of 2.35.

### <Example 1: synthesis of PMAL>

Lithium aluminum hydride in an amount of 150 parts was placed in a cooler-equipped reactor, the air in the reactor was replaced with nitrogen, 6000 parts of N-methylmorpholine were added, and then the mixture was heated to 130°C and refluxed. To the mixture was added a solution containing 600 parts of the polymethyl methacrylate synthesized in the production example and 6000 parts of N-methylmorpholine, and the mixture was further refluxed for 1 hour after the drop of the solution was completed. Thereafter, 1000 parts of ethyl acetate were dropped to deactivate an unreacted hydride, and 5000 parts of a 50% phosphoric acid aqueous solution were further dropped. After cooled, the mixture was separated into a supernatant liquid and a solid content by centrifugation. The obtained supernatant liquid was added to distilled water to precipitate a polymer (first polymer). On the other hand, to the obtained solid content was added 10000 parts of ethanol, the mixture was heated for dissolution at 60°C for 1 hour and filtered with a glass filter, the obtained filtrate was condensed with an evaporator, and then added to distilled water to precipitate a polymer (second polymer). The polymers (first polymer and second polymer) obtained by the precipitation treatments were mixed together, added to distilled water at 100°C, sufficiently washed by boiling, and then dried at 100°C for 15 hours in a vacuum drier to give a copolymer (PMAL-1).

As a result of the analysis described above, the molar ratio (A)/(B) of the structural unit (A) to the structural unit (B) in the PMAL-1 was 999, the content of the structural unit (A) of all the structural units was 99.90 mol% and the content of the structural unit (B) was 0.10 mol%. With use of the copolymer, a multilayer-formed film was manufactured and evaluated in terms of melt moldability. The gel-formed granules generated were 11 granules/m², and the film was determined to be A. Further, the film was evaluated in terms of gas barrier properties. The ketchup was hardly discolored and the film was determined to be A.

### <Example 2>

A PMAL-2 was obtained by performing the same operation as in Example 1 except for changing the amount for use of lithium aluminum hydride to 200 parts and changing to 4 hours a reflux period after the drop of the solution containing polymethyl methacrylate and N-methylmorpholine was completed.

### <Example 3>

A PMAL-3 was obtained by performing the same operation as in Example 2 except for changing the amount for use of lithium aluminum hydride to 110 parts.

### <Reference Example 4> (not in accordance with the invention)

A PMAL-4 was obtained by performing the same operation as in Example 2 except for changing the amount for use of lithium aluminum hydride to 100 parts.

### <Reference Example 5> (not in accordance with the invention)

A PMAL-5 was obtained by performing the same operation as in Example 2 except for changing the amount for use of lithium aluminum hydride to 75 parts.

### <Reference Example 6> (not in accordance with the invention)

A PMAL-6 was obtained by performing the same operation as in Example 2 except for changing the amount for use of lithium aluminum hydride to 55 parts.

### <Example 7>

A PMAL-7 was obtained by performing the same operation as in Example 1 except for using, in place of polymethyl methacrylate, poly(n-propyl methacrylate) obtained through radical polymerization of n-propyl methacrylate as a raw material, and changing the amount for use of lithium aluminum hydride to 120 parts.

The radical polymerization was performed by adding 0.1 parts of 2,2'-azobisisobutyronitrile (AIBN) relative to 100 parts of n-propyl methacrylate and heating the mixture at 80°C in toluene.

### <Reference Example 8> (not in accordance with the invention)

A PMAL-10 was obtained in the same manner as in Example 1 except for replacing the polymethyl methacrylate synthesized in the production example with "GF" (brand) of "PARAPET (registered trade name)" manufactured by KURARAY CO., LTD. The PMAL-10 has, in addition to the structural units (A) and (B), a structural unit derived from allyl alcohol.

### <Comparative Example 1>

A PMAL-8 was obtained by performing the same operation as in Example 2 except for changing the amount for use of lithium aluminum hydride to 250 parts.

### <Comparative Example 2>

A PMAL-9 was obtained by performing the same operation as in Example 2 except for changing the amount for use of lithium aluminum hydride to 35 parts.

Table 1 shows evaluation results of Examples 1, 2, 3 and 7, Reference Examples 4, 5, 6 and 8 and Comparative Examples 1 and 2.

**[Table 1]**

| | | Synthesis PMAL | | | | | | | Melt moldability | Gas barrier properties |
|---|---|---|---|---|---|---|---|---|---|---|
| | | PMMA (part by mass) | LiAlH₄ (part by mass) | Reaction period (hour) | (A) | (B) | | (A)/(B) | | |
| | | | | | mol% | I mol% | X | | | |
| Example 1 | PMAL-1 | 600 | 150 | 1 | 99.90 | 0.10 | OMe | 999 | A | A |
| Example 2 | PMAL-2 | 600 | 200 | 4 | 99.99 | 0.01 | OMe | 9999 | C | A |
| Example 3 | PMAL-3 | 600 | 110 | 4 | 91 | 9 | OMe | 10.1 | A | A |
| Reference Example 4 | PMAL-4 | 600 | 100 | 4 | 80 | 20 | OMe | 4.0 | B | B |
| Reference Example 5 | PMAL-5 | 600 | 75 | 4 | 60 | 40 | OMe | 1.5 | C | C |
| Reference Example 6 | PMAL-6 | 600 | 55 | 4 | 40 | 60 | OMe | 0.7 | D | C |
| Example 7 | PMAL-7 | 600 | 120 | 1 | 99.90 | 0.10 | OPr | 999 | A | A |
| Reference Example 8 | PMAL-10 | 600 | 150 | 1 | 87.60 | 0.10 | OMe | 876 | A | B |
| Comparative Example 1 | PMAL-8 | 600 | 250 | 4 | 100 | 0 | - | - | E | A |
| Comparative Example 2 | PMAL-9 | 600 | 35 | 4 | 25 | 75 | OMe | 0.3 | E | D |

### <Example 9: manufacturing of single layer film>

The PMAL-1 obtained in Example 1 was pelletized by melt extrusion at 220°C by LABO PLASTOMILL (manufactured by Toyo Seiki Seisaku-sho, Ltd.) with a twin screw extruder having a screw diameter of 20 mm. A single layer film having a thickness of 15 µm was obtained by forming a single layer film, with use of the obtained pellets, by LABO PLASTOMILL (manufactured by Toyo Seiki Seisaku-sho, Ltd.) with a single screw extruder (screw diameter 20 mm) and a coat hanger die (width 300 mm, a lip gap 0.3 mm), at a die temperature of 220°C. The obtained single layer film was colorless and transparent and had an excellent appearance.

### <Example 10: manufacturing of laminated film>

On both surfaces of the single layer film obtained in Example 9 was laminated a low-density polyethylene (LDPE) film having a corona-treated surface that is to be adhered and having a thickness of 50 µm with a urethane adhesive agent interposed between both the surfaces and the LDPE film to give a laminated film having a structure of LDPE/PMAL-1/LDPE = 50 µm/15 µm/50 µm. Two 10-cm square films were cut out from the obtained laminated film between which 20 g of ketchup was disposed, and the films were heat-sealed in a nitrogen box and subjected to a storage test at 40°C and a relative humidity of 50% for 180 days. As a result, no change in color was found in ketchup.

### <Example 11: application of PMAL to adhesive agent>

A laminated film having a structure of LDPE/EF-F/LDPE was obtained in the same manner as in Example 10 except for using, in place of an intermediate layer made from the PMAL-1, a film that was made from "EF-F" manufactured by KURARAY CO., LTD. and that had a thickness of 15 µm, and using, as the urethane adhesive agent, one obtained by adding the PMAL-1 to the urethane adhesive agent used in Example 10 so that the content of the PMAL-1 became 10 mass% of the whole adhesive agent. The same evaluation as in Example 10 was performed and no discoloration was found in ketchup.

### <Example 12: manufacturing of pouch>

A urethane-isocyanate adhesive agent ("TAKELAC A-385"/"TAKENATE A-10" manufactured by Takeda Pharmaceutical Company Limited) was applied at a weight of a solid content per area of 2.5 g/m² onto a surface of a biaxially stretched polypropylene film (OPP, "Tohcello OP U-1" manufactured by Tohcello Co., Ltd., melting point 155°C, thickness 20 µm), and then the single layer film obtained in Example 9 was laminated on the adhesive agent-applied surface by a dry lamination method. Next, a linear low-density polyethylene film (LLDPE, "Tohcello TUX-TC" manufactured by Tohcello Co., Ltd., density 0.92 g/cm³, thickness 65 µm) was laminated on a surface of the single layer film by the same dry lamination method to manufacture a multilayer structure (laminated film having a total thickness of 100 µm) having a structure of OPP/PMAL-1/LLDPE. Next, the multilayer structure was sealed with the surface of LLDPE as a seal surface to manufacture a pouch, and then the following items (1) and (2) were evaluated.

### (1) Bag-making processability

With use of the high-speed automatic bag making machine "HSE-500A" manufactured by NISHIBE KIKAI CO., LTD., a three end-sealed bag (pouch, 150 × 230 mm, sealing width 15 mm) was made at a seal bar temperature of 180°C and at a bag-making speed of 85 bags/min. The pouch made was excellent in terms of appearance of a sealed surface (presence or absence of appearance defects such as a dart, a pinhole, waving, whitening, and seal shifting) and seal strength.

### (2) Appearance

The three end-sealed bag (pouch) was visually checked to comprehensively determine its appearance in terms of presence or absence of appearance defects such as gel, fish eyes, streaks, wood-grain patterns, and coloring, and transparency (whitening feeling).

### <Example 13: manufacturing of hollow molded container>

With use of the direct blow multilayer hollow molding machine TB-ST-6P manufactured by Yugen Kaisha Suzuki Tekkosho, a 3-component 5-layer hollow molded container (volume 350 ml) was molded by a direct blow molding method with the PMAL-1 obtained in Example 1 set as an intermediate layer, polypropylene (PP, "B200" manufactured by Mitsui Petrochemical Industries, Ltd.) as inner and outer layers, and further maleic anhydride-modified polypropylene (M-PP, "Admer QB540" manufactured by Mitsui Petrochemical Industries, Ltd.) as an adhesive layer, so that the container had a trunk thickness structure of PP (320 µm, outer layer)/M-PP (10 µm)/PMAL-1/M-PP (10 µm)/PP (350 µm, inner layer) and a total thickness of 700 µm. The moldability and the appearance of the container were very excellent. A die temperature during the molding was set to 220°C, and a blow mold temperature was 25°C.

### <Example 14: manufacturing of vacuum insulator>

A vacuum insulator was manufactured with use of the multilayer structure that was obtained in Example 12 and had a structure of OPP/PMAL-1/LLDPE. Specifically, first, the multilayer structure was cut into two multilayer structures having a predetermined shape. Next, the two multilayer structures were stacked with the OPP layers inside and heat-sealed at three sides of the rectangle to form a bag. Next, an insulative core material was charged from an aperture of the bag, and the bag was sealed at a temperature of 20°C and an internal pressure of 10 Pa with use of a vacuum packing machine (VAC-STAR 2500 manufactured by Frimark GmbH). Thus, the vacuum insulator was manufactured without problems. As the insulative core material, a silica fine powder was used that was dried at 120°C for 4 hours.

### <Example 15: manufacturing of coating film>

A coating film was manufactured with use of the PMAL-1 obtained in Example 1. Specifically, 0.5 g of the PMAL-1 obtained in Example 1 was dissolved in 9.5 g of 1-propanol to prepare a coating liquid. Subsequently, the coating liquid was applied with a bar coater onto a biaxially stretched polyethylene terephthalate film having a surface thereof corona-treated and having a thickness of 12 µm, namely "P60" (brand) of "Lumirror" (registered trade name) manufactured by Toray Industries, Inc. so that a dried coating had a thickness of 1.0 µm on the corona treated surface. The coated film was dried at 100°C for 5 minutes and subsequently at 140°C for 10 minutes to form a PMAL-1 layer on the polyethylene terephthalate film. Thus, the coating film (multilayer structure) could be obtained that had excellent appearance and had a structure of polyethylene terephthalate/PMAL-1 layer.

### <Example 16: manufacturing of solar battery module>

A solar battery module was manufactured with use of the multilayer structure obtained in Example 15. Specifically, first, an amorphous silicon solar battery cell provided on a 10-cm square piece of hardened glass was held in an ethylene-vinyl acetate copolymer film having a thickness of 450 µm. Next, the multilayer structure was placed on the film and attached together so that the polyethylene terephthalate layer of the multilayer structure was directed outside, to manufacture a solar battery module. The attachment was performed by vacuuming at 150°C for 3 minutes and then crimping for 9 minutes. The thus manufactured solar battery module operated excellently and exhibited excellent electric output characteristics over a long period of time.

### <Example 17: application of PMAL to powder coating>

The PMAL-1 obtained in Example 1 was subjected to a low-temperature pulverizer (use of liquid nitrogen) and a powder was obtained whose particles passed through a 20 wire mesh but remained on a 100 wire mesh. The obtained powder was charged into thermal spraying equipment, sprayed onto a 150 × 250 × 2 mm-sized steel sheet that had been degreased and washed with a solvent, and cooled in the air. Thereby, steel sheets were obtained that had a PMAL-1 layer with an average thickness of 55 µm and that had a PMAL-1 layer with an average thickness of 400 µm. Both the steel sheets were excellent in glossiness and smoothness of the PMAL-1 layer.

### <Example 18: manufacturing of liquid packing paper container>

Both surfaces of paper (a paper board) as a base material were subjected to a flame treatment, and then 50-µm-thick low-density polyethylene (LDPE) was laminated on both the surfaces of the paper by an extrusion coating method to manufacture a 3-layer structure having a structure of LDPE/paper/LDPE. A surface of the 3-layer structure, or a low-density polyethylene layer was corona-treated, and then, the PMAL-1 obtained in Example 1 was laminated on the corona-treated surface by an extrusion coating method at a thickness of 15 µm to manufacture a multilayer structure having a structure of four layers.

A gable-top paper container having a size of 7 cm (length) × 7 cm (width) × 19 cm (height) was manufactured from the multilayer structure having a structure of four layers in such a manner that the PMAL-1 layer became an inner layer, and the paper container was filled with orange juice, the air in the paper container was replaced with nitrogen, and the paper container was heat-sealed at an upper portion for encapsulation. As a result of a sensory test of alternation in taste after 10 week storage in an environment at 20°C and 100 %RH, the quality of the content hardly changed from before the storage.

### <Example 19: manufacturing of thermoformed container>

With the PMAL-1 obtained in Example 1 set as an intermediate layer, homopolypropylene (PP, "J103" manufactured by Grand Polymer Co., Ltd., MI = 3.0 g/10 min (230°C, load 2160 g), Vicat softening point 155°C) as inner and outer layers, and maleic anhydride-modified polypropylene ("Admer QF500" manufactured by Mitsui Petrochemical Industries, Ltd., MI = 5.3 g/10 min (230°C, load 2160 g)) as an adhesive agent (AD) layer, a thermoforming sheet was obtained by a co-extruder with a T die, the thermoforming sheet being a 3-component 5-layer (PP/AD/PMAL-1/AD/PP = thickness 400 µm/20 µm/20 µm/20 µm/400 µm), 860 µm in total thickness. The obtained sheet was thermoformed (use of compressed air: 5 kg/cm², plug: 45ϕ × 65 mm, syntax form, plug temperature: 150°C, mold temperature: 70°C) into a cup shape (mold shape 70ϕ × 70 mm, draw ratio S = 1.0) at a sheet temperature of 150°C by a thermoforming machine (manufactured by Asano Laboratories Co., Ltd.), so that a thermoformed container could be obtained that had an excellent appearance.

### <Example 20: manufacturing of shrink film>

The PMAL-1 obtained in Example 1 was pelletized by melt extrusion at 210°C by LABO PLASTOMILL (manufactured by Toyo Seiki Seisaku-sho, Ltd.) with a twin screw extruder having a screw diameter of 20 mm. The obtained pellets were subjected to a 3-component 5-layer co-extruder to manufacture a multilayer sheet (ionomer resin layer/adhesive resin layer/PMAL-1 layer/adhesive resin layer/ionomer resin layer). The thickness of the layers that constitute the sheet was 250 µm for both the outermost ionomer resin ("Himilan 1652" manufactured by DUPONT-MITSUI POLYCHEMICALS CO., LTD.) layers, 30 µm for the adhesive resin ("Admer NF500" manufactured by Mitsui Petrochemical Industries, Ltd.) layers, and 90 µm for the PMAL-1 layer. The obtained sheet was subjected to a pantagraph type biaxial stretching machine to perform simultaneous biaxial stretching at a stretch ratio of 4 × 4 times at 90°C, so that a shrink film was obtained that had a thickness structure of the layers of 15/2/6/2/15 µm, 40 µm in total thickness.

The obtained multilayer shrink film had no unevenness and uneven thickness and was relatively excellent in appearance and transparency. Further, the multilayer shrink film was folded in two, heat-sealed at two ends (both sides) to manufacture a bag, and heat-sealed at a charging port under vacuum after processed meat was charged into the bag. Thereafter, the vacuum-packed bag was immersed in hot water at 85°C for 5 seconds to thermally shrink the film. As a result, the film firmly attached to the meat had no creases, was small in abnormal transformation of the content, and thus was relatively excellent.

### <Example 21: manufacturing of pipe>

The PMAL-1 obtained in Example 1 was subjected to a 4-component 5-layer co-extrusion multilayer pipe molding apparatus to manufacture a pipe having an outer diameter of 20 mm. The structure of the pipe was an outermost layer that was made from 12 polyamide (UBE Nylon 30200 manufactured by Ube Industries, Ltd.) and had a thickness of 450 µm/an adhesive resin layer (Admer VF500 manufactured by Mitsui Petrochemical Industries, Ltd.) having a thickness of 50 µm/a 6 polyamide layer (AMILAN CM1046 manufactured by Toray Industries, Inc.) having a thickness of 100 µm/a PMAL-1 layer having a thickness of 150 µm/an innermost layer that was made from 6 polyamide (AMILAN CM1046 manufactured by Toray Industries, Inc.) and had a thickness of 250 µm.

Next, water having dissolved oxygen removed therefrom with use of a packed column filled with metallic tin was circulated in the pipe manufactured above, and measurement was performed to obtain an increase rate of concentration of oxygen dissolved in the water at a temperature of 70°C. The increase rate µg/(L•hr) referred to herein indicates an increase rate µg/hr of dissolved oxygen per 1 L of water in the pipe. That is, with the volume of water in all the systems of the apparatus including the pipe defined as Vcc, the volume of water in the pipe as V'cc, and increase amount in concentration of oxygen in water circulated in the apparatus per unit hour as B µg/(L•hr), the increase rate of dissolved oxygen A µg/(L•hr) indicates a value calculated by A = B•(V/V'). As a result of measuring the increase rate in concentration of dissolved oxygen in the pipe at a relative humidity of 80% in an external atmosphere, the increase rate in dissolved oxygen was 1 µg/(L•hr), and an excellent result could be obtained.

### <Example 22: manufacturing of fuel tank (blow molded container)>

A blow molded container was manufactured with use of the PMAL-1 obtained in Example 1 and a collected resin that was prepared from the PMAL-1 and is described below.

### (1) Preparation of collected resin

After dry blending of 4 parts by mass of the PMAL-1 obtained in Example 1, 86 parts by mass of high-density polyethylene ("HZ8200B" available from Mitsui Chemicals, Inc., melt flow rate (MFR) at 190°C and a load of 2160 g = 0.01 g/10 min), and 10 parts by mass of an adhesive resin ("ADMER GT-6A" available from Mitsui Chemicals, Inc., melt flow rate at 190°C and 2160 g = 0.94 g/10 min), the blended materials were subjected to extrusion pelletization in a nitrogen atmosphere with use of a twin screw extruder ("2D25W" available from Toyo Seiki Seisaku-sho, Ltd., 25 mmϕ, die temperature 220°C, screw speed 100 rpm). Further, in order to obtain a model collected resin, the extruded pellets were further subjected to the same extruder and extruded under the same conditions for pelletization, and the same operation was performed four times in total (the blending is performed by the extruder five times in total) to give a collected resin.

### (2) Manufacturing of fuel tank (blow molded container)

With use of the dry pellets of the PMAL-1, the high-density polyethylene, the adhesive resin, and the collected resin, a blow molded container was manufactured that had a 4-component 6-layer structure of (inside) high-density polyethylene/adhesive resin/PMAL-1/adhesive resin/collected resin/PMAL-1 (outside), by the blow molding machine "TB-ST-6P" available from Suzuki Tekkosho, at 210°C. In the production of the blow molded container, cooling was performed at a mold internal temperature of 15°C for 20 seconds, and a 3-L tank was molded that had a total layer average thickness of 1000 µm ((inside) high-density polyethylene/adhesive resin/PMAL-1/adhesive resin/collected resin/PMAL-1 (outside) = (inside) 340/50/40/50/400/120 µm (outside)). The bottom diameter of the tank was 100 mm, and the height was 400 mm. The obtained blow molded container was evaluated in terms of appearance and was found to be an excellent container having less streaks or the like.

### <Example 23: manufacturing of single layer film having nylon blended therein, and laminated film and pouch including single layer film>

After dry blending of 80 parts by mass of the PMAL-1 obtained in Example 1 and 20 parts by mass of a polyamide ("Ny1018A" (Nylon 6) available from Ube Industries, Ltd.), the blended materials were subjected to extrusion pelletization in a nitrogen atmosphere with use of a twin screw extruder (Toyo Seiki Seisaku-sho, Ltd., 2D25W, 25 mmϕ) under the extrusion conditions of a die temperature of 250°C and a screw speed of 100 rpm.

Next, with use of a single screw extruder (Toyo Seiki Seisaku-sho, Ltd., D2020, D (mm) = 20, L/D = 20, compression ratio = 2.0, screw: full-flight), a single layer film having a thickness of 20 µm was manufactured from the extruded pellets. Extrusion conditions are indicated as follows.
Extrusion temperature: 250°C
Screw speed: 40 rpm
Die width: 30 cm
Take-up roll temperature: 80°C
Take-up roll speed: 3.1 m/min

The obtained single layer film, a commercially available biaxially stretched Nylon 6 film ("EMBLEM ON," available from UNITIKA LTD., average thickness 15 µm), and a commercially available unstretched polypropylene film ("Tohcello CP" available from Mitsui Chemicals Tohcello, Inc., average thickness 60 µm) were cut into a A4 size, an adhesive agent for dry lamination was applied onto both surfaces of the single layer film, dry lamination was performed so that the Nylon 6 film became an outer layer and the unstretched polypropylene film became an inner layer, and drying was performed at 80°C for 3 minutes, to give a 3-layer transparent laminated film. Used as the adhesive agent for dry lamination was one containing "TAKELAC A-385" available from Mitsui Chemicals, Inc. as a main agent, "TAKENATE A-50" available from Mitsui Chemicals, Inc. as a curing agent, and ethyl acetate as a diluting fluid. The application amount of the adhesive agent was 4.0 g/m². After the lamination, curing was performed at 40°C for 3 days.

With use of the obtained laminated film, a pouch was manufactured that was sealed at four ends of a square with an inside dimension of 12 × 12 cm. Water was poured into the pouch as a content. The pouch was subjected to a retort treatment at 120°C for 20 minutes with use of a retorting apparatus (high-temperature and high-pressure cooking sterilization tester "RCS-40RTGN" available from Hisaka Works, Ltd.). After the retort treatment, water on the surface of the pouch was wiped off, the pouch was left to stand in a high temperature and humidity chamber at 20°C and 65 %RH for 1 day, and then appearance characteristics of the pouch was evaluated as evaluation of retort resistance and determined to be excellent without large changes.

### REFERENCE SIGNS LIST

10: Vertically-made, filled, and sealed bag, 11: Multilayer structure, 11a: Edge, 11b: Body, 11c: Periphery, 20: Flat pouch, 30: Vacuum insulator, 31: Core material, 40: Electronic device, 41: Electronic device main body, 42: Sealing member, 43: Protective sheet (multilayer structure)

## Claims

1. A polymethallyl alcohol copolymer comprising:
a structural unit (A) represented by the following formula (A) and a structural unit (B) represented by the following formula (B),
a molar ratio (A)/(B) of the structural unit (A) to the structural unit (B) being greater than or equal to 0.5,
a lower limit value of the content of the structural unit (A) of all the structural units is 90 mol%, 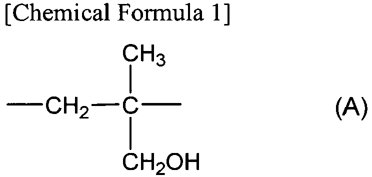 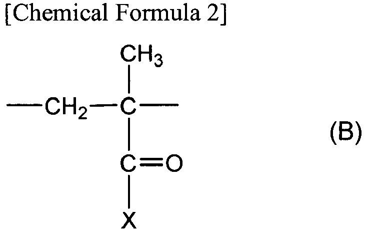 (wherein, X represents at least one selected from the group consisting of a hydrogen atom, an alkoxy group, a hydroxy group, and an alkyl group having 1 to 3 carbon atoms).

2. The polymethallyl alcohol copolymer according to claim 1, wherein a content of the structural unit (B) is 0.01 to 60 mol% of all the structural units.

3. The polymethallyl alcohol copolymer according to claim 1 or 2, wherein the structural unit (B) is a methacrylic acid ester unit.

4. A molding comprising the polymethallyl alcohol copolymer according to any one of claims 1 to 3.

5. The molding according to claim 4, being a multilayer structure including at least one layer containing the polymethallyl alcohol copolymer.

6. The molding according to claim 5, comprising at least one layer that contains the polymethallyl alcohol copolymer and a thermoplastic resin layer laminated on one surface or both surfaces of the layer that contains the polymethallyl alcohol copolymer.

7. The molding according to claim 5 or 6, wherein the layer containing the polymethallyl alcohol copolymer has a thickness of 0.1 to 1000 µm.

8. The molding according to any one of claims 4 to 7, being a packing material.

9. A method of producing the polymethallyl alcohol copolymer according to any one of claims 1 to 3, comprising the steps of:
obtaining a polymer through polymerization of a monomer composition including a monomer (I) represented by the following formula (I); and
reducing a part of a structural unit derived from the monomer (I) in the polymer 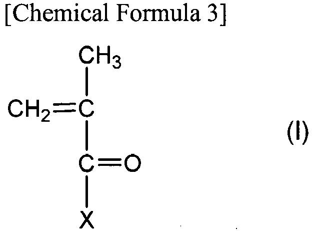 (wherein, X represents at least one selected from the group consisting of a hydrogen atom, an alkoxy group, a hydroxy group, and an alkyl group having 1 to 3 carbon atoms).

## Patentansprüche

1. Polymethallylalkoholcopolymer, umfassend:
eine Struktureinheit (A), dargestellt durch die folgende Formel (A), und eine Struktureinheit (B), dargestellt durch die folgende Formel (B),
wobei ein Molverhältnis (A)/(B) der Struktureinheit (A) zu der Struktureinheit (B) mehr als oder gleich 0,5 beträgt,
ein niedriger Grenzwert des Anteils der Struktureinheit (A) bezüglich sämtlicher Struktureinheiten 90 Mol-% beträgt, 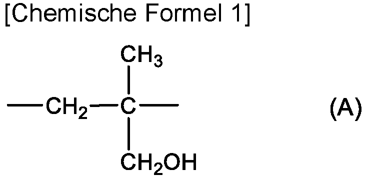 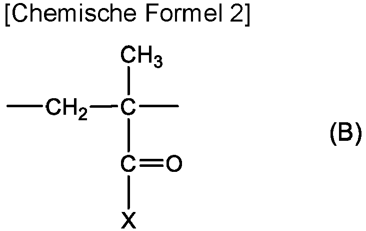 (worin X mindestens eines darstellt, ausgewählt aus der Gruppe, bestehend aus einem Wasserstoffatom, einer Alkoxygruppe, einer Hydroxygruppe und einer Alkylgruppe mit 1 bis 3 Kohlenstoffatomen).

2. Polymethallylalkoholcopolymer gemäß Anspruch 1, wobei ein Anteil der Struktureinheit (B) 0,01 bis 60 Mol-% bezüglich sämtlicher Struktureinheiten beträgt.

3. Polymethallylalkoholcopolymer gemäß Anspruch 1 oder 2, wobei die Struktureinheit (B) eine Methacrylsäureester-Einheit ist.

4. Formgegenstand, umfassend das Polymethallylalkoholcopolymer gemäß einem der Ansprüche 1 bis 3.

5. Formgegenstand gemäß Anspruch 4, welcher eine mehrschichtige Struktur, die mindestens eine Schicht, enthaltend das Polymethallylalkoholcopolymer, einschließt, ist.

6. Formgegenstand gemäß Anspruch 5, umfassend mindestens eine Schicht, welche das Polymethallylalkoholcopolymer enthält, und eine thermoplastische Harzschicht, laminiert auf einer Oberfläche oder beiden Oberflächen der Schicht, die das Polymethallylalkoholcopolymer enthält.

7. Formgegenstand gemäß Anspruch 5 oder 6, wobei die Schicht, enthaltend das Polymethallylalkoholcopolymer, eine Dicke von 0,1 bis 1000 µm aufweist.

8. Formgegenstand gemäß einem der Ansprüche 4 bis 7, welcher ein Verpackungsmaterial ist.

9. Verfahren zur Herstellung des Polymethallylalkoholvcopolymers gemäß einem der Ansprüche 1 bis 3, umfassend die Schritte:
Erhalten eines Polymers durch Polymerisation einer Monomerzusammensetzung, welche ein Monomer (I), dargestellt durch die folgende Formel (I), einschließt; und
Reduzieren eines Teils einer Struktureinheit, abgeleitet von dem Monomer (I), in dem Polymer, 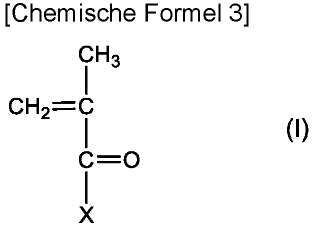 (worin X mindestens eines darstellt, ausgewählt aus der Gruppe, bestehend aus einem Wasserstoffatom, einer Alkoxygruppe, einer Hydroxygruppe und einer Alkylgruppe mit 1 bis 3 Kohlenstoffatomen).

## Revendications

1. Copolymère de poly(alcool méthallylique) comprenant :
une unité structurale (A) représentée par la formule (A) suivante et une unité structurale (B) représentée par la formule (B) suivante,
le rapport molaire (A)/(B) de l'unité structurale (A) à l'unité structurale (B) étant supérieur ou égal à 0,5,
la valeur limite inférieure de la teneur en unité structurale (A) par rapport à toutes les unités structurales étant de 90% en moles, 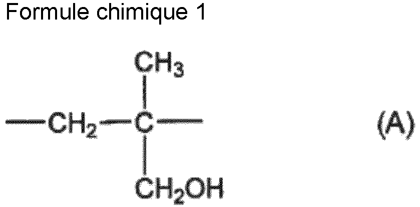 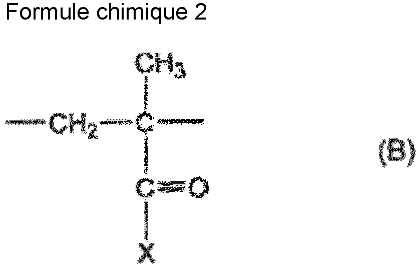
dans laquelle X représente au moins l'un choisi parmi le groupe consistant en un atome d'hydrogène, un groupe alcoxy, un groupe hydroxy et un groupe alkyle ayant 1 à 3 atomes de carbone.

2. Copolymère de poly(alcool méthallylique) selon la revendication 1, dans lequel la teneur en unité structurale (B) se situe dans l'intervalle allant de 0,01 à 60% en moles par rapport à toutes les unités structurales.

3. Copolymère de poly(alcool méthallylique)selon la revendication 1 ou 2, dans lequel l'unité structurale (B) est une unité ester d'acide méthacrylique.

4. Article moulé comprenant le copolymère de poly(alcool méthallylique) selon l'une quelconque des revendications 1 à 3.

5. Article moulé selon la revendication 4, qui est une structure multicouche comprenant au moins une couche comprenant le copolymère de poly(alcool méthallylique).

6. Article moulé selon la revendication 5, comprenant au moins une couche qui contient le copolymère de poly(alcool méthallylique) et une couche de résine thermoplastique stratifiée sur une face ou les deux faces de la couche qui contient le copolymère de poly(alcool méthallylique).

7. Article moulé selon la revendication 5 ou 6, dans lequel la couche qui contient le copolymère de poly(alcool méthallylique) a une épaisseur allant de 0,1 à 1000 µm.

8. Article moulé selon l'une quelconque des revendications 4 à 7, qui est un matériau d'emballage.

9. Procédé de production d'un copolymère de poly(alcool méthallylique) selon l'une quelconque des revendications 1 à 3, comprenant les étapes de :
obtention d'un polymère par polymérisation d'une composition de monomères comprenant un monomère (I) représenté par la formule (I) suivante, et
réduction d'une partie des unités structurales dérivés du monomère (I) dans le polymère 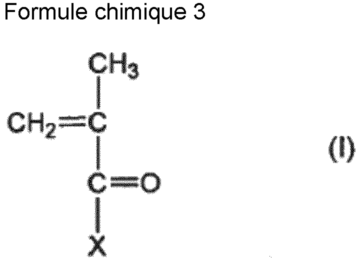
dans laquelle X représente au moins l'un choisi parmi le groupe consistant en un atome d'hydrogène, un groupe alcoxy, un groupe hydroxy et un groupe alkyle ayant 1 à 3 atomes de carbone.
